# EUROPEAN PATENT SPECIFICATION

(11) **EP 3 975 188 B1**
(45) Date of publication and mention of the grant of the patent: **14.02.2024**
(21) Application number: 19935741.9
(22) Date of filing: 19.07.2019
(51) Int. Cl.: H01F 27/36, H01F 5/00, G12B 17/02, H02J 50/10, H01F 38/14

(54) **ELECTRIC FIELD SHIELDING APPARATUS THAT DOES NOT AFFECT TRANSMISSION EFFICIENCY OF WIRELESSLY COUPLED TRANSMISSION COIL**
VORRICHTUNG ZUR ABSCHIRMUNG ELEKTRISCHER FELDER OHNE BEEINTRÄCHTIGUNG DER ÜBERTRAGUNGSEFFIZIENZ EINER DRAHTLOS GEKOPPELTEN SENDESPULE
DISPOSITIF DE BLINDAGE CONTRE LES CHAMPS ÉLECTRIQUES QUI N'AFFECTE PAS L'EFFICACITÉ DE TRANSMISSION D'UNE BOBINE DE TRANSMISSION COUPLÉE SANS FIL

(30) Priority: 26.06.2019 CN 201910562397
(43) Date of publication of application: 30.03.2022
(73) Proprietor: Zhejiang Nurotron Biotechnology Co., Ltd., Hangzhou, Zhejiang 311121 (CN)
(72) Inventor: HUANG, Sui, Hangzhou, Zhejiang 311121 (CN); ZENG, Guoxing, Hangzhou, Zhejiang 311121 (CN); SUN, Xiaoan, Hangzhou, Zhejiang 311121 (CN)
(74) Representative: Sun, Yiming
(86) International application number: PCT/CN2019/096645
(87) International publication number: WO 2020/258411

(56) References cited:
- WO-A1-2013/061610
- US-A1- 2015 122 884
- US-A1- 2017 084 991

## Description

### TECHNICAL FIELD

The present invention relates to the field of implantable medical devices, and in particular, to an electric field shielding apparatus that does not affect the transmission efficiency of a wirelessly coupled transmission coil.

### BACKGROUND TECHNOLOGY

US 2017/084991 A1 describes an antenna structure for wireless power transfer including a ground plane configured to prevent passage of an electric field. At least one coil is configured as an antenna and located over the ground plane. The ground plane is contiguous over the coil. An insulator is located between the ground plane and the at least one coil. A shield is adjacent the coil, the shield comprising a non-contiguous structure, and is configured to allow the passage of a magnetic field to the at least one coil.

US 2015/122884 A1 describes a non-contact communication module having a substrate including an antenna including an antenna coil placed annularly in the substrate, and a ground pattern for grounding formed in the substrate. An antenna-side land is formed on an external surface of the substrate, and is electrically connected to the antenna. A ground-side land is formed on the external surface of the substrate, and is electrically connected to the ground pattern. A distance between the antenna-side land and the ground-side land is such that the antenna-side land and the ground-side land can be connected by use of a solder bridge.

In implantable medical devices, the way of transmitting data and energy in a wirelessly coupled manner is widely applied; however, in actual application processes, the near field strong coupling manner is prone to produce multiple harmonics and electric field radiation, causing electromagnetic radiation indices to exceed the standard. To solve this problem, we usually choose to use shielding measures. The usual shielding measures generally use a well-grounded metal mesh or cover to achieve electromagnetic shielding; however, this method causes a time-varying magnetic field in a transmission coil to induce a voltage when it is close to the shielding metal, thereby generating an eddy current on the metal plane. According to Lenz's law, the eddy current will produce a magnetic flux that resists excitation, resulting in an equivalent reduction in the number of magnetic turns of the transmission coil, thus causing a weakening of the transmission magnetic field, and a serious decrease in the inductance value of the transmission coil, thereby affecting circuit resonance, reducing wirelessly coupled transmission efficiency, and increasing the power consumption of this type of circuit.

### SUMMARY OF THE INVENTION

In view of this, the object of the present invention is to provide an electric field shielding apparatus that does not affect the transmission efficiency of a wirelessly coupled transmission coil, the shielding apparatus can be used to effectively reduce the electric field radiation of a wirelessly coupled transmission circuit, the shielding apparatus has little effect on wireless transmission efficiency and wirelessly coupled resonance, and other circuit components are placed above the shielding apparatus, so that the circuit area of the transmission coil can be effectively reduced, and the entire apparatus has advantages such as simple design and easy implementation.

In order to achieve the described object, the present invention provides an electronic circuit as defined by the appended claims.

The beneficial effects of the present invention lie in that: the apparatus has little effect on the transmission efficiency of a transmission coil, is easy to implement, and can effectively reduce the electric field radiation of wirelessly coupled transmission; and other circuit components are placed above the apparatus, thereby effectively reducing the circuit area of the transmission coil.

### BRIEF DESCRIPTION OF THE DRAWINGS

To make the object, technical solutions, and beneficial effects of the present invention clearer, the present invention provides the following description with reference to the accompanying drawings:
FIG. 1 is a layout schematic diagram of a printed circuit board of a specific application example in an electric field shielding apparatus that does not affect the transmission efficiency of a wirelessly coupled transmission coil according to an embodiment of the present invention;
FIG. 2 is a layered schematic diagram of a printed circuit board of a specific application example in an electric field shielding apparatus that does not affect the transmission efficiency of a wirelessly coupled transmission coil according to an embodiment of the present invention;
FIG. 3 is a block diagram of a wirelessly coupled transmission circuit of a specific application example in an electric field shielding apparatus that does not affect the transmission efficiency of a wirelessly coupled transmission coil according to an embodiment of the present invention;
FIG. 4 is a comparison diagram of electromagnetic radiation of a specific application example in the electric field shielding apparatus that does not affect the transmission efficiency of a wirelessly coupled transmission coil according to the embodiment of the present invention.

### DETAILED DESCRIPTION OF THE EMBODIMENTS

Hereinafter, preferred embodiments of the present invention will be described in detail with reference to the accompanying drawings.

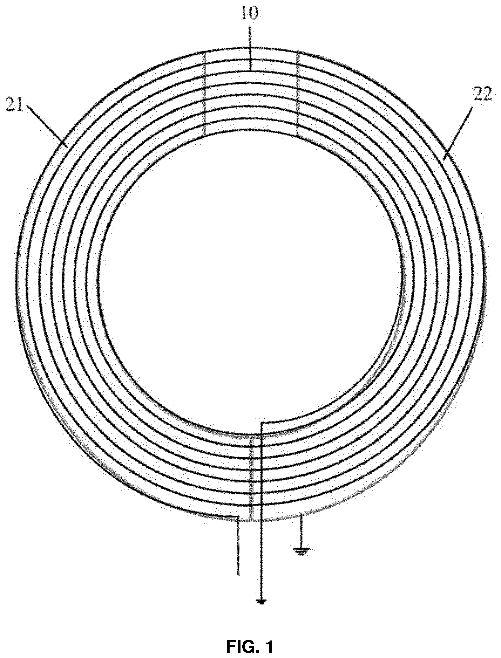

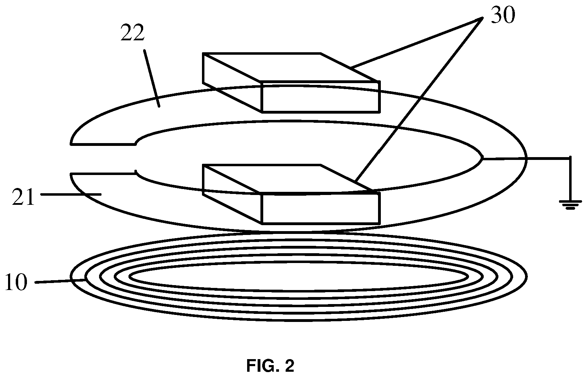

Referring to FIGS. 1 and 2, illustrated are a layout schematic diagram and a layered schematic diagram of a printed circuit board of an electric field shielding apparatus that does not affect the transmission efficiency of a wirelessly coupled transmission coil according to an embodiment of the present invention.

Taking a four-layer printed circuit board as an example, a transmission coil 10 is located at the lowest first layer, a left semi-annular metal sheet 21 and a right semi-annular metal sheet 22 are located at the third layer above the transmission coil 10, and other electronic components 30 are located at the fourth layer above the left semi-annular metal sheet 21 and the right semi-annular metal sheet 22.

In a specific embodiment, the left semi-annular metal sheet 21 and the right semi-annular metal sheet 22 have an outer ring diameter greater than or equal to the maximum diameter of the transmission coil 10, and an inner ring diameter less than or equal to the minimum diameter of the transmission coil 10.

The top of the circular ring composed of the left semi-annular metal sheet 21 and the right semi-annular metal sheet 22 is provided with a gap greater than one tenth of the maximum coil diameter, and the bottoms of the semi-annular metal sheets are connected to each other and are grounded where they are connected.

Other electronic components 30 and wirings are provided above the left semi-annular metal sheet 21 and the right semi-annular metal sheet 22, and do not interfere with the transmission coil.

The left semi-annular metal sheet 21, the right semi-annular metal sheet 22 and the transmission coil 10 are on the same printed circuit board.

The copper thickness of the left semi-annular metal sheet 21 and the right semi-annular metal sheet 22 is 35-100 microns.

The transmission coil 10 has a maximum diameter of 10-100 mm, and a wireless coupling signal frequency of 50K-50M Hz.

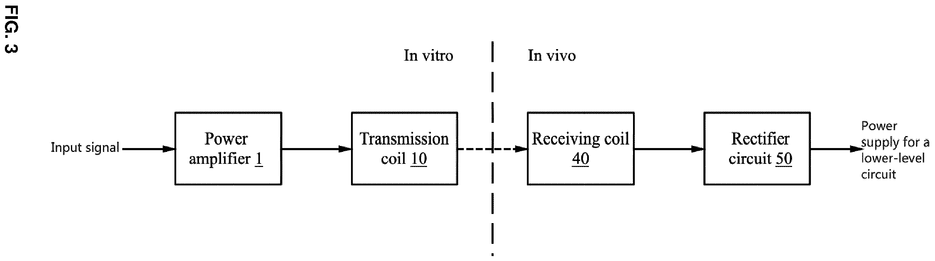

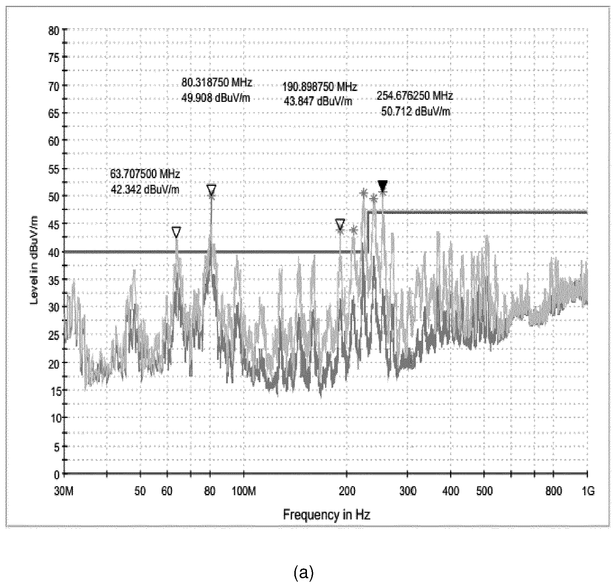

FIG. 3 is a block diagram of a wirelessly coupled transmission circuit of a specific application example in an electric field shielding apparatus that does not affect the transmission efficiency of a wirelessly coupled transmission coil according to an embodiment of the present invention. After an input signal is amplified by a power amplifier 1, the signal is transmitted to a receiving coil 40 by means of a transmission coil 10 in a wirelessly coupled manner, and the receiving coil 40 transmits the received signal and energy to a lower-level circuit of the implant by means of a rectifier circuit 50. By adding the left semi-annular metal sheet 21 and the right semi-annular metal sheet 22 of the present invention above the transmission coil 10, the loop of an eddy current is cut off, and the effect of the eddy current on the wirelessly coupled efficiency is avoided. Table 1 is a comparison table of test results obtained by adding no electric field shielding apparatus, a fully-enclosed electric field shielding apparatus, and an electric field shielding apparatus with a gap. It can be determined from table 1 that when the traditional fully enclosed electric field shielding apparatus is used, the inductance value of the transmission coil is reduced by 44.2%, and the transmission efficiency is reduced by 29.8%; and when the electric field shielding apparatus in the embodiment of the present invention is used, the inductance value is reduced by 0.964%, and the transmission efficiency is reduced by 3%. Hence, the electric field shielding apparatus in the embodiment of the present invention has much less effect on the transmission efficiency of the wirelessly coupled transmission coil than the traditional electric field shielding apparatus.

**Table 1 is a comparison table of test results of adding no electric field shielding apparatus, adding a fully-enclosed electric field shielding apparatus, and adding an electric field shielding apparatus with a gap.**

| Shielding condition | Inductance value of transmission coil (uH) | Inductance variation rate | Transmission efficiency | Transmission efficiency variation rate |
|---|---|---|---|---|
| No shielding | 3.008 | - | 53.3% | - |
| Fully enclosed electric field shielding apparatus | 1.678 | -44.2% | 37.4% | -29.8% |
| Electric field shielding apparatus with a gap | 2.979 | -0.964% | 51.7% | -3.0% |

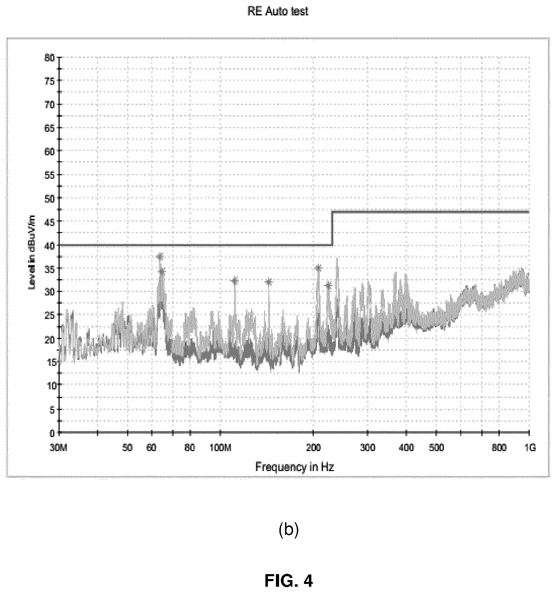

FIG. 4 is a comparison diagram of electromagnetic radiation of a specific application example in an electric field shielding apparatus that does not affect the transmission efficiency of a wirelessly coupled transmission coil according to an embodiment of the present invention. In FIGS. (a) and (b), the abscissa represents the frequency (in Hz), and the ordinate represents the electromagnetic radiation intensity (in dBuV/m). In FIG. (a), the transmission coil uses no shielding apparatus, and in FIG. (b), the transmission coil uses the shielding apparatus in the embodiment of the present invention. The electromagnetic radiation intensity in FIG. (b) is much less than that in FIG. (a), which proves that the shielding apparatus in the embodiment of the present invention has an obvious shielding effect on electromagnetic radiation.

The circuit of the present invention can effectively reduce electric field radiation of wirelessly coupled transmission, has a little effect on the transmission efficiency of a transmission coil, and is easy to implement; and other circuit components are placed above the apparatus, thereby effectively reducing the circuit area of the transmission coil.

Finally, it should be noted that the preferred embodiments above are only intended to illustrate the technical solutions of the present invention, but not to limit the present invention. Although the present invention has been described in detail through the preferred embodiments above, a person skilled in the art should understand that various changes can be made in form and detail without departing from the scope of the present invention as defined in the claims.

## Claims

1. A electronic circuit having a transmission coil (10), an electric field shielding apparatus, and other electronic components (30), wherein said electric field shielding apparatus does not affect the transmission efficiency of said wirelessly coupled transmission coil (10), wherein the electric field shielding apparatus is composed of two semi-annular metal sheets (21, 22), wherein both semi-annular metal sheets are provided above said transmission coil,
wherein bottoms of the semi-annular metal sheets are connected,
wherein a top of the circular ring composed of the two semi-annular metal sheets is provided with a gap,
wherein the bottoms of the semi-annular metal sheets are grounded where they are connected,
**characterized in that**
said electronic circuit has wirings which are placed with the electronic components above the semi-annular metal sheets,
wherein said electronic components and wirings do not interfere with the transmission coil, wherein said gap is greater than one tenth of the diameter of the maximum diameter of said transmission coil.

2. The electronic circuit according to claim 1, **characterized in that** the semi-annular metal sheets have an outer ring diameter greater than or equal to the maximum diameter of the transmission coil, and an inner ring diameter less than or equal to the minimum diameter of the transmission coil.

3. The electronic circuit according to claim 1, **characterized in that** the semi-annular metal sheets and the transmission coil are on a same printed circuit board.

4. The electronic circuit according to claim 1, **characterized in that** the copper thickness of the semi-annular metal sheets is 35-100 microns.

5. The electronic circuit according to claim 1, **characterized in that** the maximum diameter of the transmission coil is 10-100 mm.

6. The electronic circuit according to claim 1, **characterized in that** the transmission coil has a wireless coupling signal frequency of 50 kHz to 50 MHz.

## Patentansprüche

1. Elektronische Schaltung, die eine Sendespule (10), eine Vorrichtung zur Abschirmung elektrischer Felder und andere elektronische Bauteile (30) aufweist, wobei die Vorrichtung zur Abschirmung elektrischer Felder die Sendeeffizienz der drahtlos gekoppelten Sendespule (10) nicht beeinträchtigt, wobei die Vorrichtung zur Abschirmung elektrischer Felder aus zwei halbringförmigen Metallblechen (21, 22) besteht, wobei beide halbringförmigen Metallbleche über der Übertragungsspule bereitgestellt sind,
wobei Unterteile der halbringförmigen Metallbleche verbunden sind,
wobei ein Oberteil des kreisförmigen Rings, der aus den zwei halbringförmigen Metallblechen besteht, mit einer Lücke versehen ist,
wobei die Unterteile der halbringförmigen Metallbleche geerdet sind, wo sie verbunden sind,
**dadurch gekennzeichnet, dass**
die elektronische Schaltung Verdrahtungen aufweist, die mit den elektronischen Bauteilen über den halbringförmigen Metallblechen platziert sind, wobei die elektronischen Bauteile und Verdrahtungen sich nicht gegenseitig mit der Sendespule überlagern, wobei die Lücke größer als ein Zehntel des Durchmessers des Höchstdurchmessers der Sendespule ist.

2. Elektronische Schaltung nach Anspruch 1, **dadurch gekennzeichnet, dass** die halbringförmigen Metallbleche einen äußeren Ringdurchmesser, der größer oder gleich dem Höchstdurchmesser der Sendespule ist, und einen inneren Ringdurchmesser aufweisen, der kleiner oder gleich dem Mindestdurchmesser der Sendespule ist.

3. Elektronische Schaltung nach Anspruch 1, **dadurch gekennzeichnet, dass** die halbringförmigen Metallbleche und die Sendespule sich auf einer selben gedruckten Leiterplatte befinden.

4. Elektronische Schaltung nach Anspruch 1, **dadurch gekennzeichnet, dass** die Kupferdicke der halbringförmigen Metallbleche zwischen 35 und 100 Mikrometer beträgt.

5. Elektronische Schaltung nach Anspruch 1, **dadurch gekennzeichnet, dass** der Höchstdurchmesser der Sendespule zwischen 10 und 100 mm beträgt.

6. Elektronische Schaltung nach Anspruch 1, **dadurch gekennzeichnet, dass** die Sendespule eine drahtlose Koppelsignalfrequenz von 50 kHz bis 50 MHz aufweist.

## Revendications

1. Circuit électronique comportant une bobine de transmission (10), un appareil de blindage contre les champs électriques et d'autres composants électroniques (30), dans lequel ledit appareil de blindage contre les champs électriques n'affecte pas l'efficacité de transmission de ladite bobine de transmission couplée sans fil (10), dans lequel l'appareil de blindage contre les champs électriques est composé de deux tôles semi-annulaires (21, 22), dans lequel les deux tôles semi-annulaires sont pourvues au-dessus de ladite bobine de transmission,
dans lequel les fonds des tôles semi-annulaires sont connectés,
dans lequel un sommet de l'anneau circulaire composé des deux tôles semi-annulaires est pourvu d'un interstice,
dans lequel les fonds des tôles semi-annulaires sont mis à la terre là où ils sont connectés,
**caractérisé en ce que**
ledit circuit électronique comporte des fils qui sont placés avec les composants électroniques au-dessus des tôles semi-annulaires,
dans lequel lesdits composants électroniques et lesdits fils n'interfèrent pas avec la bobine de transmission,
dans lequel ledit interstice est supérieur à un dixième du diamètre maximum de ladite bobine de transmission.

2. Circuit électronique selon la revendication 1, **caractérisé en ce que** les tôles semi-annulaires ont un diamètre d'anneau externe supérieur ou égal au diamètre maximum de la bobine de transmission, et un diamètre d'anneau interne inférieur ou égal au diamètre minimum de la bobine de transmission.

3. Circuit électronique selon la revendication 1, **caractérisé en ce que** les tôles semi-annulaires et la bobine de transmission se trouvent sur un même circuit imprimé.

4. Circuit électronique selon la revendication 1, **caractérisé en ce que** l'épaisseur de cuivre des tôles semi-annulaires est de 35 à 100 microns.

5. Circuit électronique selon la revendication 1, **caractérisé en ce que** le diamètre maximum de la bobine de transmission est de 10 à 100 mm.

6. Circuit électronique selon la revendication 1, **caractérisé en ce que** la bobine de transmission a une fréquence de signal de couplage sans fil de 50 kHz à 50 MHz.
